# EUROPÄISCHE PATENTSCHRIFT

(11) **EP 2 930 448 B1**
(45) Veröffentlichungstag und Bekanntmachung des Hinweises auf die Patenterteilung: **10.05.2017**
(21) Anmeldenummer: 15160494.9
(22) Anmeldetag: 24.03.2015
(51) Int. Cl.: F25B 35/04, F25B 17/08

(54) **REAKTOR**
REACTOR
RÉACTEUR

(30) Priorität: 08.04.2014 DE 102014206744
(43) Veröffentlichungstag der Anmeldung: 14.10.2015
(73) Patentinhaber: Vaillant GmbH, 42859 Remscheid (DE)
(72) Erfinder: Badenhop, Thomas, 51688 Wipperfürth (DE); Eichholtz, David, 44789 Bochum (DE)
(74) Vertreter: Hocker, Thomas

(56) Entgegenhaltungen:
- DE-A1- 3 509 564
- DE-A1-102009 036 544
- DE-T2- 69 432 431
- US-A- 5 477 705
- US-A1- 2002 053 217
- US-A1- 2013 333 571

## Beschreibung

Die Erfindung betrifft einen Reaktor für eine Adsorptions- oder Absorptionswärmepumpe oder für einen Sorptionswärmespeicher.

Eine Adsorptionswärmepumpe mit Reaktor ist bekannt aus der Patentanmeldung DE10 242 820A1. Ein Reaktor für eine Adsorptionswärmepumpe ist zudem bekannt aus der Patentanmeldung EP 2 447 625 A2.

Adsorptions- oder Absorptionswärmepumpen auf der Basis fester Sorptionsmittel und verdampfbarer Flüssigkeiten als Arbeitsmittel basieren auf einem zyklischen Prozess, in welchem der im sorbierten Zustand bei sonst gleichen Bedingungen verminderte Dampfdruck des Arbeitsmittels die Transformation eines Wärmestroms von einem niedrigerem Temperaturniveau in einen Wärmestrom auf höherem Temperaturniveau ermöglicht. Der Behälter mit dem aktiven Material (Sorptionsmittel) wird als Reaktor bezeichnet. Unterbricht man den zyklischen Prozess in einem Zustand, bei welchem das Sorptionsmittel ganz oder teilweise vom Arbeitsmittel entladen ist, so kann man den Reaktor auch als Wärmespeicher verwenden. Zu diesem Zweck muss durch eine geeignete Absperrvorrichtung der erneute Zutritt von Arbeitsmittel in den Reaktor verhindert werden. Um zu einem späteren Zeitpunkt die Sorptionswärme (bzw. Nutzkälte) verfügbar zu machen, gestattet man durch Öffnen der Absperrvorrichtung wieder den Zutritt von Arbeitsmittel in den Reaktor.Die Patentschrift DE 694 32 431 T2 U zeigt einen Reaktor für eine Adsorptionswärmepumpe gemäß dem Oberbegriff von Anspruch 1.

Aus der Offenlegungsschrift DE 10 2009 036 544 A1 ist eine Wärmepumpe und ein Rotationsventil zur wechselnden Verschaltung einer Mehrzahl von Fluidströmen zur Ansteuerung einer Wärmepumpe bekannt. Durch das Rotationsventil können als Absorberelemente ausgebildete Hohlelemente der Wärmepumpe gezielt mit einem Fluid versorgt werden.

Der Reaktor in dem das Sorptionsmittel, zum Beispiel Zeolith, gelagert ist wird gemäß dem Stand der Technik im Betrieb über die gesamte Reaktorfläche einem Fluid, zum Beispiel feuchter Luft, angeströmt. Die Adsorptionsleistung aufgrund der Wärmebereitstellung durch Adsorption des in der Luft enthaltenen Wassers sowie die Desorptionsleistung der Reaktoreinheit kann über Temperatur- und Feuchtegehalt der durchströmenden Luft sowie den Massenstrom moduliert werden.

Es hat sich jedoch gezeigt, dass ein Reaktor nach dem Stand der Technik nicht geeignet ist, einen ausreichend breiten Bereich von Desorptions- und Adsorptionsleistungen abzudecken. Wird beispielsweise Solarthermie zur Desorption eingesetzt, treten hierbei Spitzenleistungen auf, welche durch den Reaktor ebenso wie kleinere Leistungen abgedeckt werden müssen. Weiterhin ist die Adsorptionsleistung abhängig von der Wärmesenke, beispielsweise dem Wärmebedarf von einem Gebäude, abhängig. Der Wärmebedarf des Gebäudes ist wiederrum von unterschiedlichen Faktoren, wie der Jahreszeit, Dämmstandard, der Personenanzahl sowie dem Nutzerverhalten abhängig.

Hierbei ist nachteilig, dass eine Modulation über den Massenstrom der durchströmenden Luft nur im begrenzten Maß möglich ist, da ansonsten Druckverluste sowie die Anströmung der Luft auf den Reaktor vom Optimum abweichen, was sich wiederum negativ auf den Wirkungsgrad des Systems auswirkt.

Es ist daher Aufgabe der Erfindung, einen Reaktor für eine Adsorptions- oder Absorptionswärmepumpe oder für einen Sorptionswärmespeicher bereitzustellen, der verbesserte Modulationsmöglichkeiten bietet.

Diese Aufgabe wird gemäß den Merkmalen des Anspruchs 1 dadurch gelöst, dass im Reaktor einzelne Kammern parallel geschaltet werden und über ein verstellbares Verschlussmittel die für die benötigte Leistung erforderliche Anzahl an Kammern bereitgestellt werden kann, indem nicht benötigte Kammern durch das Verschlussmittel verschlossen werden. Der erfindungsgemäße Reaktor kann die Adsorptions-und Desorptionsleistung durch die Änderung der Anzahl der von dem Fluid zu durchströmenden Kammern variieren. Die einzelnen Kammern sind im Strömungsweg parallel angeordnet.

Vorteilhafte Ausgestaltungen ergeben sich durch die Merkmale der abhängigen Ansprüche.

Dadurch ist es möglich, eine variable Anzahl von Kammern an dem Sorptionsprozess zu beteiligen. Dadurch kann der Reaktor besonders gut an verschiedene Leistungsanforderungen angepasst werden.

Das Antriebsmittels 7 kann beispielsweise ein Motor sein oder eine Feder, wobei im Falle einer Feder das Verschlussmittel durch den Druck des ein strömenden Fluid verschoben werden kann. Dies hat den Vorteil, dass mit steigendem Massenstrom automatisch eine höhere Anzahl an Kammern vom Fluid durchströmt werden und dass kein zusätzliches Antriebsmittels benötigt wird.

Je nach Wärmebedarf bei Adsoprtion bzw. verfügbarer Desorptionsleistung werden mit Hilfe des Verschlussmittels 6 Kammern 3 zu- oder abgeschaltet. Neben der Leistungsregelung kann ebenfalls eine optimale Betriebsregelung realisiert werden, in dem durch Zuschalten von Kammern 3 der Druckverlust über dem Reaktor minimiert wird.

Es ist möglich, den Eingang 1 auf beiden Seiten des Eingangskanals 5 vorzusehen, wobei durch einen hier nicht dargestelltes Umschaltmittel das Fluid entweder über die eine Seite oder über die andere Seite in den Eingangskanal strömt. Dadurch ist es möglich, auch Kammern an dem Sorptionsmittels zu beteiligen, die sonst nur bei maximaler Leistung durchströmt werden. Ein weiterer Vorteil ist, dass das Sorptionsmittel in den Kammern, die momentan nicht an dem Sorptionsprozess beteiligt sind, im laufenden Reaktorbetrieb auszutauschen. So können beispielsweise erst die Kammern auf der einen Seite des Verschlussmittel 6 entleert oder befüllt werden, danach wird das Fluid über den gegenüberliegenden Eingang in den Eingangskanal 5 geführt und anschließend werden die restlichen Kammern 3 entleert oder befüllt.

Bevorzugt ist das Verschlussmittel 6 und das Antriebsmittels 7 im Eingangskanal 5 angeordnet. Es ist jedoch auch möglich, das Verschlussmittel 6 und das Antriebsmittels 7 im Ausgangskanal 13 vorzusehen.

Die Erfindung zeichnet sich dadurch aus, dass ein standardisiertes Reaktormodell unabhängig von der Antriebsenergie zur Desorption eingesetzt werden kann und auch Lastspitzen bei der Absorption realisiert werden können. Weiterhin ist das Reaktormodell skalierbar, so dass unterschiedliche Einsatzgebiete bedient werden können. Es wird zu jedem Betriebspunkt eine gezielte Anzahl an Kammern 3 zur Verfügung gestellt, so dass auch die entstehenden Druckverluste über dem Reaktor minimiert werden können, was wiederum eine Senkung der Betriebskosten zur Förderung des Fluids bewirkt.

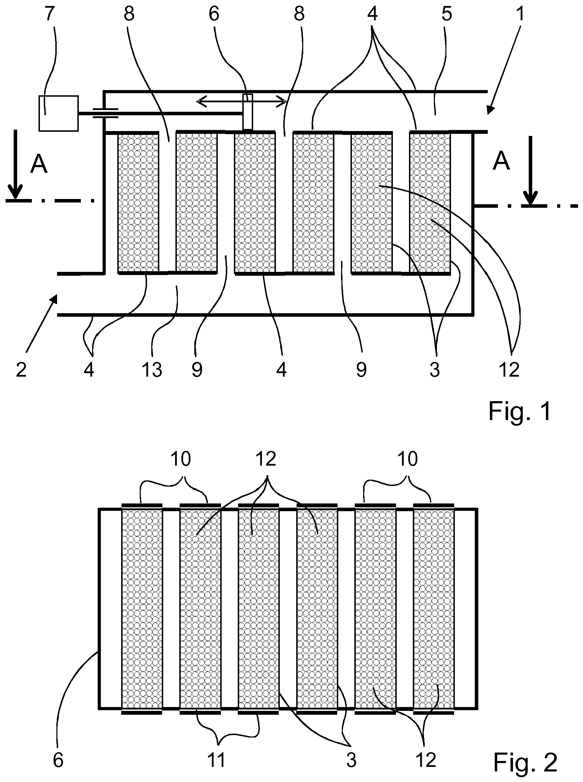

Figur 2 stellt den Schnitt A-A durch den erfindungsgemäßen Reaktor aus Figur 1 dar. Die an die Außenseite des Reaktors grenzenden Kammern 3 weisen auf der einen Seite, in der Regel oben, eine Befüllvorrichtung 10 auf und an der gegenüberliegenden Seite eine Entleervorrichtung 11 auf. Dadurch ist es möglich, dass Sorptionsmittel 12 zu entnehmen bzw. die Kammern mit Sorptionsmittel 12 zu befüllen. Da durch das Verschlussmittel 6 einzelne Kammern die aktivierbar sind, ist es möglich, dass Sorptionsmittel auch im laufenden Betrieb auszutauschen. Die in Figur 2 als einfacher Verschluss dargestellten Befüllvorrichtungen können auch anders ausgebildet sein, beispielsweise als Trichter, so dass das als Granulat vorliegende Sorptionsmittel automatisch in die Kammern einfüllbar ist. Gleiches gilt für die Entleervorrichtung. Ebenfalls ist es möglich, das Befüllen und Entleeren durch die gleiche Öffnung vorzunehmen. Vorteilhaft steht die Ebene, in der das Befüllen und Entleeren erfolgt, senkrecht zu der Ebene, in der die Verteilung des Fluids in die Ein- und Ausgangslücken 8, 9 erfolgt.

### Bezugszeichenliste

- 1: Eingang
- 2: Ausgang
- 3: Kammer
- 4: Leitmittel
- 5: Eingangskanal
- 6: Verschlussmittel
- 7: Antriebsmittel
- 8: Eingangslücken
- 9: Ausgangslücken
- 10: Befüllvorrichtung
- 11: Entleervorrichtung
- 12: Sorptionsmittel
- 13: Ausgangskanal

## Patentansprüche

1. Reaktor für eine Adsorptions- oder Absorptionswärmepumpe oder für einen Sorptionswärmespeicher, umfassend zumindest einen Hohlkörper zur Aufnahme von Sorptionsmittel (12) sowie einen Eingang (1) und einen Ausgang für ein das Sorptiv fördernde Fluid, wobei der Hohlkörper zur Aufnahme von Sorptionsmittel (12) in mehrere Kammern (3) unterteilt ist, wobei Leitmittel (4) vorgesehen sind, die das Fluid so durch die Kammern (3) führen, dass die Kammern (3) bezüglich des Fluidstroms parallel geschaltet durchströmt werden, **dadurch gekennzeichnet, dass** ein verstellbares Verschlussmittel (6) vorgesehen ist, das mit dem Leitmittel (4) zusammenwirkt und so verstellbar ist, dass durch eine wählbare Anzahl von Kammern (3) kein Fluid geführt wird und dass die Kammern (3) im Reaktor mit Abstand zueinander parallel angeordnet sind, wobei Eingangslücken (8) zwischen jeweils zwei Kammern (3) angeordnet und mit einem Eingangskanal (5) zum Eingang (1) verbunden sind und Ausgangslücken (9) mit einem Ausgangskanal (13) zum Ausgang (2) verbunden sind, wobei die Lücken (8, 9) zwischen den Kammern abwechselnd zum Ausgang (2) und zum Eingang (1) hin durch das Leitmittel (4) verschlossen sind, so dass das Fluid vom Eingang kommend in mit dem Eingang (1) verbundenen Eingangslücken (8), durch die Kammern (3) hindurch in mit dem Ausgang (2) verbundenen Ausgangslücken (9) zum Ausgang (2) strömen kann.

2. Reaktor nach Anspruch 1, wobei das Verschlussmittel (6) so ausgebildet ist, dass es die Verbindung zwischen Eingang (1) und einer oder mehreren Eingangslücken (8) verstellbar verschließt.

3. Reaktor nach Anspruch 2, wobei der Eingangskanal (5) den Eingang (1) mit den Eingangslücken (8) verbindet, wobei der Eingangskanal (5) an einem Ende mit dem Eingang verbunden (1) ist, und wobei das Verschlussmittel (6) als Stopfen ausgebildet ist, der an beliebiger Position des Eingangskanals (5) so positionierbar ist, dass die Eingangslücken (8), die zwischen dem Verschlussmittel und dem Eingang angeordnet sind, vom Fluid durchströmbar sind und die anderen Eingangslücken nicht durchströmbar sind.

4. Reaktor nach einem der vorhergehenden Ansprüche, wobei die Kammern (3) mit einer Befüllvorrichtung (10) zum Befüllen mit Sorptionsmittel (12) und/oder mit einer Entleervorrichtung (11) zum Entleeren verbunden sind.

5. Reaktor nach Anspruch 4, wobei die Kammern (3) so gestaltet sind, dass die Öffnungen zum Befüllen und Entleeren jeweils gegenüber liegen, dass die Öffnungen zur Eingangslücke (8) und zur Ausgangslücke (9) jeweils gegenüber liegen und dass sich die gedachten Verbindungslinien zwischen den Öffnungen zum Befüllen und Entleeren und den Öffnungen zur Eingangslücke (8) und zur Ausgangslücke (9) oder Parallelen dieser Verbindungslinien im wesentlichen orthogonal zueinander sind.

6. Reaktor nach Anspruch 4 oder 5, wobei der Eingangskanal (5) an beiden Enden mit dem Eingang (1) verbindbar ist und wobei die Befüllvorrichtung (10) und/oder die Entleervorrichtung (11) so ausgebildet ist, dass selektiv das Sorptionsmittel (12) einzelner Kammern (3) befüllt oder entleert werden kann.

7. Reaktor nach einem der vorhergehenden Ansprüche, wobei das Verschlussmittel (6) und die mit dem Verschlussmittel (6) zusammenwirkenden Mittel an Stelle des Eingangs am Ausgang angeordnet ist.

## Claims

1. Reactor for an adsorption heat pump or an absorption heat pump or for a sorption heat storage device, comprising at least one hollow body for receiving sorbent (12) as well as an input (1) and an output for a fluid carrying the sorbent, wherein the hollow body for receiving the sorbent (12) in divided into multiple chambers (3), wherein guiding means (4) are provided which guide the fluid through the chambers (3) such that the chambers (3) are connected in parallel with respect to the fluid flow, **characterized in that** adjustable closing means (6) are provided which cooperate with the guiding means (4) and are adjustable so that no fluid is passed through a selectable number of chambers (3), and the chambers (3) are arranged in the reactor spaced apart from each other and in parallel, wherein input gaps (8) are arranged between two respective chambers (3) and connected with the input channel (5) to the input (1) and output gaps (9) are connected with the output channel (13) to the output (2), wherein the gaps (8, 9) between the chambers are alternately closed to the output (2) and the input (1) by the guide means (4), such that the fluid coming from the input can flow in input gaps (8), connected to the input (1), through the chambers (3) in output gaps (9) connected to the output (2), to the output (2).

2. Reactor according to claim 1, wherein the closing means (6) are formed to adjustably close the connection between the input (1) and one or more input gaps (8).

3. Reactor according to claim 2, wherein the input channel (5) connects the input (1) with the input gaps (8), wherein the input channel (5) is connected at one end to the input (1), and wherein the closing means (6) are formed as a plug which can be positioned at any position in the input channel (5), such that the input gaps (8) arranged between the closing means and the input can be passed through by the fluid and the other input gaps cannot be passed through by the fluid.

4. Reactor according to any of the preceding claims, wherein the chambers (3) are connected to a filling device (10) for filling with sorbent (12) and/or to an emptying device (11) for emptying.

5. Reactor according to claim 4, wherein the chambers (3) are formed so that the openings for filling and emptying lie opposite each other, the openings to the input gap (8) and output gap (9) lie opposite each other and the imaginary connecting lines between the openings for filling and emptying and the openings to the input gap (8) and output gap (9) or parallels of these connecting lines are substantially orthogonal to each other.

6. Reactor according to claim 4 or 5, wherein the input channel (5) is connectable at both ends to the input (1) and wherein the filling device (10) and/or the emptying device (11) are formed so that the sorbent (12) of single chambers (3) can selectively be filled or emptied.

7. Reactor according to any of the preceding claims, wherein the closing means (6) and the means cooperating with the closing means (6) are arranged at the output instead of at the input.

## Revendications

1. Réacteur pour une pompe à chaleur d'adsorption ou d'absorption ou pour un accumulateur de chaleur de sorption, comprenant au moins un corps creux pour recevoir un sorbant (12) ainsi qu'une entrée (1) et une sortie pour un fluide transportant le sorbant, dans lequel le corps creux pour recevoir le sorbant (12) est subdivisé en plusieurs chambres (3), dans lequel il est prévu des moyens conducteurs (4) qui guident le fluide à travers les chambres (3) en sorte que les chambres (3) soient parcourues en parallèle par rapport au courant de fluide, **caractérisé en ce qu'**il est prévu un moyen de fermeture réglable (6) qui coopère avec les moyens conducteurs (4) et est réglable de sorte qu'aucun fluide ne soit guidé à travers un nombre sélectionnable de chambres (3) et que les chambres (3) soient agencées dans le réacteur parallèlement à distance l'une de l'autre, dans lequel des interstices d'entrée (8) sont agencés entre respectivement deux chambres (3) et sont reliés au canal d'entrée (5) à l'entrée (1) et des interstices de sortie (9) sont reliés au canal de sortie (13) à la sortie (2), dans lequel les interstices (8, 9) entre les chambres sont fermés par les moyens conducteurs (4) en alternance à la sortie (2) et à l'entrée (1) de sorte que le fluide puisse s'écouler de l'entrée à la sortie (2) en passant des interstices d'entrée (8) reliés à l'entrée (1) à travers les chambres (3) dans les interstices de sortie (9) reliés à la sortie (2).

2. Réacteur selon la revendication 1, dans lequel le moyen de fermeture (6) est conçu de manière qu'il ferme de manière réglable la liaison entre l'entrée (1) et un ou plusieurs interstices d'entrée (8).

3. Réacteur selon la revendication 2, dans lequel le canal d'entrée (5) relie l'entrée (1) aux interstices d'entrée (8), dans lequel le canal d'entrée (5) est relié à l'entrée (1) à une extrémité et dans lequel le moyen de fermeture (6) se présente sous la forme d'un bouchon, qui peut être positionné dans une position quelconque du canal d'entrée (5) de sorte que les interstices d'entrée (8), qui sont agencés entre le moyen de fermeture et l'entrée, puissent être parcourus par le fluide et que les autres interstices d'entrée ne puissent être parcourus.

4. Réacteur selon l'une quelconque des revendications précédentes, dans lequel les chambres (3) sont reliées à un dispositif de remplissage (10) pour les remplir d'un sorbant (12) et/ou à un dispositif de vidange (11) pour les vidanger.

5. Réacteur selon la revendication 4, dans lequel les chambres (3) sont conçues de sorte que les ouvertures de remplissage et de vidange se trouvent respectivement en regard, que les ouvertures vers l'interstice d'entrée (8) et vers l'interstice de sortie (9) soient respectivement en regard et que les lignes de liaison imaginaires entre les ouvertures de remplissage et de vidange et les ouvertures vers l'interstice d'entrée (8) et l'interstice de sortie (9) ou des parallèles de ces lignes de liaison soient sensiblement orthogonales l'une à l'autre.

6. Réacteur selon la revendication 4 ou 5, dans lequel le canal d'entrée (5) peut être relié aux deux extrémités à l'entrée (1) et dans lequel le dispositif de remplissage (10) et/ou le dispositif de vidange (11) sont conçus de sorte que, sélectivement, le sorbant (12) de certaines chambres (3) puisse être rempli ou vidé.

7. Réacteur selon l'une quelconque des revendications précédentes, dans lequel le moyen de fermeture (6) et le moyen coopérant avec le moyen de sortie (6) au point d'entrée sont agencés à la sortie.
